# EUROPEAN PATENT SPECIFICATION

(11) **EP 3 273 732 B1**
(45) Date of publication and mention of the grant of the patent: **20.04.2022**
(21) Application number: 17181866.9
(22) Date of filing: 18.07.2017
(51) Int. Cl.: H04W 56/00, H04B 7/15, H04W 84/18, G08B 25/00, H04W 74/00

(54) **COMMUNICATION DEVICE AND COMMUNICATION SYSTEM**
KOMMUNIKATIONSVORRICHTUNG UND KOMMUNIKATIONSSYSTEM
SYSTÈME DE COMMUNICATION ET DISPOSITIF DE COMMUNICATION

(30) Priority: 19.07.2016 JP 2016141593
(43) Date of publication of application: 24.01.2018
(73) Proprietor: Panasonic Intellectual Property Management Co., Ltd., Osaka-shi, Osaka 540-6207 (JP)
(72) Inventor: Kurita, Masanori, Osaka-shi, Osaka 540-6207 (JP); Nagata, Masahiro, Osaka-shi, Osaka 540-6207 (JP); Harada, Kenji, Osaka-shi, Osaka 540-6207 (JP)
(74) Representative: Appelt, Christian W.

(56) References cited:
- EP-A1- 2 413 646
- EP-A1- 2 634 931

## Description

### Technical Field

The present invention relates generally to communication devices and communication systems and particularly to a communication device and a communication system which enables cooperation of two systems with different communication schemes.

### Background Art

In the past, there has been proposed a transmission system in which a plurality of terminal devices and a beacon signal generation device are connected to a signal line (for example, JP 2007-166105 A (hereinafter referred to as "Document 1")). According to the transmission system disclosed in Document 1, any two terminal devices of the plurality of terminal devices transmit voice signals by use of time slots set in synchronization with a beacon signal outputted from the beacon signal generation device to permit a telephone conversation therebetween.

Furthermore, documents EP 2 413 646 A1 and EP 2 643 931 A1 radio or wireless communication devices are known which comprise a communication unit and a control unit configured to control the communication unit.

### Summary of Invention

To make the transmission system disclosed in Document 1 cooperate with another system with a different communication scheme from it, it is necessary to synchronize the transmission system with the other system by making the transmission system receive a beacon signal from the other system. However, the individual beacon signals are sent from the other system and the beacon signal generation device at individual timings, and this may lead to a collision between the beacon signals.

In view of the above insufficiency, an object of the present invention would be to propose a communication device and a communication system which are capable of suppressing collision between beacon signals sent from two systems with different communication schemes. This object is solved by a communication device according to claim 1 or 2. Dependent claims 3 to 6 refer to specifically advantageous realizations of the communication devices defined in claim 1 or 2.

A communication device according to an embodiment of the present invention is configured to constitute an upper system together with an upper communication device, to constitute, together with at least one communication terminal, a lower system using a communication scheme different from a communication scheme of the upper system, and to establish synchronous communication with the upper communication device and the at least one communication terminal. The communication device includes a communication unit and a control unit configured to control the communication unit. The communication unit is configured to send to and receive from the upper communication device and the at least one communication terminal a wireless signal using a radio wave as a communication medium. The control unit is configured to, when a predetermined length of time elapses from receiving a first beacon signal from the upper communication device by the communication unit, instruct the communication unit to send a second beacon signal to the at least one communication terminal. The communication scheme in the lower system is time division multiple access. The time division multiple access allows the at least one communication terminal to send the wireless signal within a time slot which is one of a plurality of time slots set after receiving the second beacon signal and is allocated to the at least one communication terminal. A length of a frame constituted by the plurality of time slots is shorter than a second length of time calculated by subtracting the predetermined length of time from a first length of time equal to a sending interval of the first beacon signal. According to this embodiment of the invention, the frame can be set within the first length of time equal to the sending interval of the first beacon signal and therefore the communication device can receive both the first beacon signal and the frame.

A communication device according to another embodiment of the present invention is configured to constitute an upper system together with an upper communication device, to constitute, together with at least one communication terminal, a lower system using a communication scheme different from a communication scheme of the upper system, and to establish synchronous communication with the upper communication device and the at least one communication terminal. The communication device includes a communication unit and a control unit configured to control the communication unit. The communication unit is configured to send to and receive from the upper communication device and the at least one communication terminal a wireless signal using a radio wave as a communication medium. The control unit is configured to, when a predetermined length of time elapses from receiving a first beacon signal from the upper communication device by the communication unit, instruct the communication unit to send a second beacon signal to the at least one communication terminal. The communication scheme in the lower system is time division multiple access. The time division multiple access allows the at least one communication terminal to send the wireless signal within a time slot which is one of a plurality of time slots set after receiving of the second beacon signal and is allocated to the at least one communication terminal. The control unit is configured to, when a length of a frame is longer than a second length of time calculated by subtracting the predetermined length of time from a first length of time equal to a sending interval of the first beacon signal, divide the frame into a plurality of divided frames (DFm (m = 1, ...)). The frame is constituted by the plurality of time slots. A length of each of the plurality of divided frames is shorter than the second length of time. The control unit is configured to select at least one divided frame of the plurality of divided frames as a communication period of time from receiving of the first beacon signal to sending of the second beacon signal by the communication unit.When the length of the frame is longer than the second length of time, the control unit divides the frame into the plurality of divided frames and select at least one divided frame as the communication period of time. Therefore, even when the length of the frame is longer than the second period of time, the communication device can receive both the first beacon signal and the frame. Note that, this configuration is optional for the communication device. The control unit may be configured not to divide the frame into the plurality of divided frames even when the length of the frame is longer than the second period of time.

Further embodiments of the invention relate to a communication system that includes: the aforementioned communication device; an upper communication device; and at least one communication terminal. The upper communication device is configured to constitute an upper system together with the communication device and to send a first beacon signal to the communication device. The at least one communication terminal is configured to constitute a lower system together with the communication device and to communicate with the communication device by a communication scheme different from a communication scheme used by the upper communication device to communicate with the communication device.

### Brief Description of Drawings

FIG. 1 is a block diagram of configurations of a communication device and a communication system according to Embodiment 1 of the present invention.
FIG. 2 is an explanatory diagram of operations of a communication device and a communication system according to a Comparative Example in relation to Embodiment 1 of the present invention.
FIG. 3 is an explanatory diagram of operations of the communication device and the communication system according to Embodiment 1 of the present invention.
FIG. 4 is a timing chart of operations of the communication device and the communication system of the above.
FIG. 5 is an explanatory diagram of operations of a communication device and a communication system according to Embodiment 2 of the present invention.

### Description of Embodiments

Hereinafter, communication devices and communication systems according to embodiments of the present invention are described in more detail with reference to attached drawings.

### (EMBODIMENT 1)

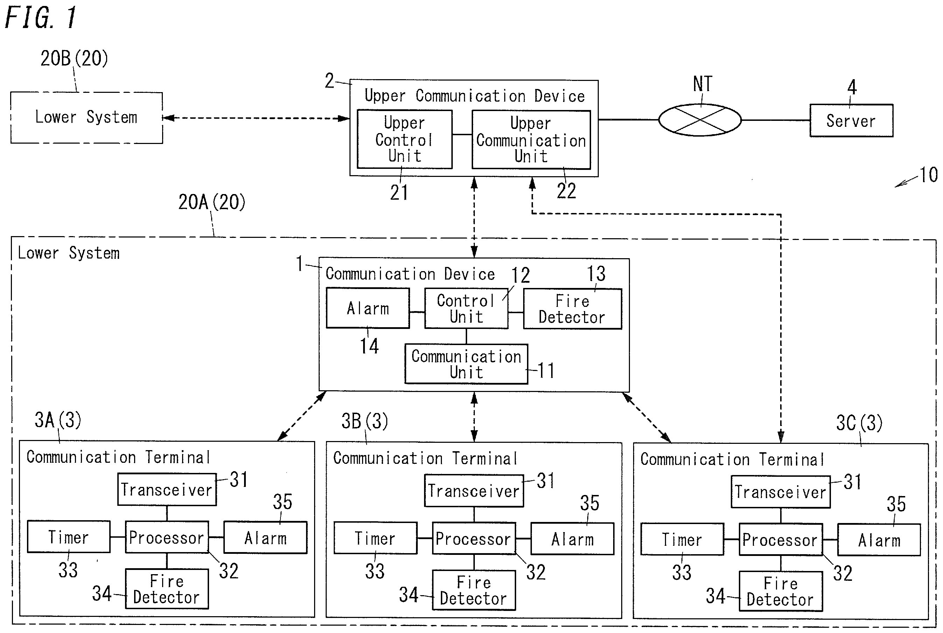

As shown in FIG. 1, a communication system of the present embodiment includes an upper system 10. This upper system 10 includes a plurality of (two, in the illustration) lower systems 20A and 20B, an upper communication device (hereinafter also referred to as an "upper system master") 2, and a server 4. Hereinafter, when there is no intent to distinguish the plurality of lower systems 20A and 20B from one another, the plurality of lower systems 20A and 20B each are referred to as a "lower system 20".

Note that, in relation to FIG. 1, broken arrows denote transmission paths of wireless signals. In this regard, communication terminals 3A and 3B also can communicate with the upper communication device 2. However, only for simplification, FIG. 1 does not illustrate broken arrows between the communication terminals 3A and 3B and the upper communication device 2.

The following description is made in relation to a case where a communication system applies to a single dwelling. Examples of buildings where communication systems apply may not be limited to single dwellings but may include multiple dwellings, and nonresidential buildings such as offices and stores.

As shown in FIG. 1, the upper system master 2 includes an upper control unit 21 and an upper communication unit 22. This upper system master 2 is an AC-powered device, and is configured to operate with power supplied from a commercial power supply, for example.

The upper control unit 21 is, for example, realized by a microcomputer including at least one CPU (Central Processing Unit) and at least one memory as main components, and when the when the at least one CPU executes at least one program stored in the at least one memory, the microcomputer functions as the upper control unit 21. In this case, the at least one program to be executed by the at least one CPU is stored in the at least one memory of the upper control unit 21. However, the at least one program may be available as being stored in advance in at least one recording medium such as memory cards, or as being provided through telecommunications circuits such as the Internet.

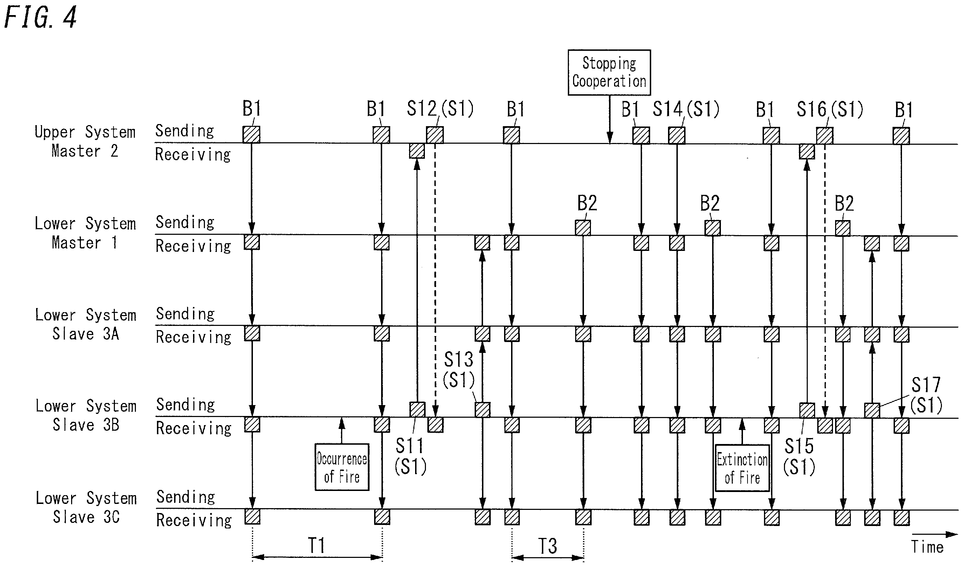

The upper communication unit 22 includes an antenna, a sending circuit, and a receiving circuit, and is configured to send and receive a wireless signal S1 (see FIG. 4) using a radio wave as a communication medium. The sending circuit produces the wireless signal S1 through modulation with data inputted from the upper control unit 21 and sends the wireless signal S1 through the antenna. The receiving circuit demodulates the wireless signal S1 received through the antenna and outputs data obtained through demodulation to the upper control unit 21. The upper communication unit 22 sends and receives the wireless signal S1 in conformity with "specified small power radio station" stipulated in Article 6, paragraph 4, item 2 of regulations of enforcement of the Japanese Radio Act, for example.

Additionally, the upper communication unit 22 is connected to the server 4 through a network NT. And, the upper communication unit 22 is configured to send to the server 4 through the network NT data obtained from the lower system 20 through wireless communication. In summary, in the present embodiment, the upper system master 2 functions as a gateway that interconnects the plurality of lower systems 20 and the server 4.

As shown in FIG. 1, the lower system 20A includes one communication device (hereinafter also referred to as a "lower system master") 1, and a plurality of (three, in the illustration) communication terminals (hereinafter also referred to as "lower system slaves") 3A to 3C. Hereinafter, when there is no intent to distinguish the plurality of lower system slaves 3A to 3C from one another, the plurality of lower system slaves 3A to 3C each are referred to as a "lower system slave 3". Note that, the plurality of lower system slaves 3 have same configurations and functions. For this reason, in the following, descriptions are made to configurations and functions of one lower system slave 3 of the plurality of lower system slaves 3.

The lower system master 1 is a fire alarm. The lower system master 1 has a function of detecting occurrence of a fire, and is placed on a ceiling of a room of a single dwelling, for example. As shown in FIG. 1, the lower system master 1 includes a communication unit 11, a control unit 12, a fire detector 13, and an alarm 14. The lower system master 1 is a battery-powered device, and is configured to operate with power supplied from a built-in battery, for example.

The communication unit 11 includes an antenna, a sending circuit, and a receiving circuit, and is configured to send and receive a wireless signal S1 (see FIG. 4) using a radio wave as a communication medium. The sending circuit produces the wireless signal S1 through modulation with data inputted from the control unit 12 and sends the wireless signal S1 through the antenna. The receiving circuit demodulates the wireless signal S1 received through the antenna and outputs data obtained through demodulation to the control unit 12. The communication unit 11 sends and receives the wireless signal S1 in conformity with "security radio equipment for low power radio station" stipulated in Article 6, paragraph 4, item 3 of regulations of enforcement of the Japanese Radio Act, for example. As shown in FIG. 1, the communication unit 11 can communicate with the upper communication unit 22 of the upper system master 2, and also can communicate with a transceiver 31 (described later) of the lower system slave 3.

The control unit 12 is, for example, realized by a microcomputer including at least one CPU and at least one memory as main components, and when the at least one CPU executes at least one program stored in the at least one memory, the microcomputer functions as the control unit 12. In this case, the at least one program to be executed by the at least one CPU is stored in the at least one memory of the control unit 12. However, the at least one program may be available as being stored in advance in at least one recording medium such as memory cards, or as being provided through telecommunications circuits such as the Internet.

The fire detector 13 is configured to detect a smoke accompanied by occurrence of a fire and change a detection amount (for example, a voltage) according to a generation amount of the smoke (concentration). Examples of a method for detecting a smoke may include a photoelectric method and a thermal method. The photoelectric method detects occurrence of a smoke by detecting by a light receiving element scattered light caused by reflection of light emitted from a light emitting element by particles of a smoke. The thermal method detects occurrence of a fire based on heat accompanied by occurrence of a fire. The fire detector 13 compares the detection amount with a threshold value preliminary set by the fire detector 13. When the detection amount exceeds the threshold value, the fire detector 13 determines that a fire has occurred.

The alarm 14 includes a buzzer for producing a buzzer sound, and a speaker for reproducing a voice message.

The lower system slave 3 is a fire alarm like the lower system master 1. The lower system slave 3 has a function of detecting occurrence of a fire and is placed on a ceiling of a room of a single dwelling, for example. As shown in FIG. 1, the lower system slave 3 includes a transceiver 31, a processor 32, a timer 33, a fire detector 34, and an alarm 35. Like the lower system master 1, the lower system slave 3 is a battery-powered device, and is configured to operate with power supplied from a built-in battery, for example.

The transceiver 31 includes an antenna, a sending circuit, and a receiving circuit, and is configured to send and receive a wireless signal S1 (see FIG. 4) using a radio wave as a communication medium. The sending circuit produces the wireless signal S1 through modulation with data inputted from the processor 32 and sends the wireless signal S1 through the antenna. The receiving circuit demodulates the wireless signal S1 received through the antenna and outputs data obtained through demodulation to the processor 32. The transceiver 31 sends and receives the wireless signal S1 in conformity with "security radio equipment for low power radio station" stipulated in Article 6, paragraph 4, item 3 of regulations of enforcement of the Japanese Radio Act, for example. As shown in FIG. 1, the transceiver 31 can communicate with the upper communication unit 22 of the upper system master 2, and also can communicate with the communication unit 11 of the lower system master 1.

The processor 32 is, for example, realized by a microcomputer including at least one CPU and at least one memory as main components, and when the at least one CPU executes at least one program stored in the at least one memory, the microcomputer functions as the processor 32. In this case, the at least one program to be executed by the at least one CPU is stored in the at least one memory of the processor 32. However, the at least one program may be available as being stored in advance in at least one recording medium such as memory cards, or as being provided through telecommunications circuits such as the Internet.

The timer 33 is a timer built in a microcomputer, for example. The timer 33 is configured to measure a length of elapsed time from receiving of a second beacon signal B2 described below from the lower system master 1. When the transceiver 31 receives the second beacon signal B2 from the lower system master 1, the timer 33 is reset and then starts to measure the length of elapsed time.

The fire detector 34 has the same configuration as the aforementioned fire detector 13 and thus detailed description thereof is omitted only for avoiding redundancy. And the alarm 35 also has the same configuration as the aforementioned alarm 14 and thus detailed description thereof is omitted only for avoiding redundancy.

The lower system 20B includes one lower system master and a plurality of lower system slaves like the lower system 20A. Note that, as for the lower system 20B, the lower system master and the lower system slaves each include a CO detector instead of the fire detector 34. In the lower system 20B, the lower system master and the lower system slaves each have a function of detecting generation of carbon monoxide (CO). These lower system master and lower system slaves are mounted on a ceiling of a basement or a garage of a single dwelling, for example. Note that, the lower system 20B has the same configurations as the lower system 20A except for the CO detector. Therefore, in the following only the CO detector is described and descriptions of other configurations are omitted only for avoiding redundancy.

The CO detector is configured to detect carbon monoxide and change a detection amount (for example, a voltage) according to a generation amount of the carbon monoxide (concentration). Examples of a method for detecting carbon monoxide may include an electrochemical method, a contact combustion based method, and a semiconductor based method. The electrochemical method is a method of measuring a generation amount of carbon monoxide based on electric energy converted from chemical reaction energy produced by oxidation-reduction reaction. The contact combustion based method is a method of measuring a generation amount of carbon monoxide based on change in a voltage accompanied by an increase in a resistance of a detection element due to combustion resulting from a reaction of carbon monoxide with the detection element. The semiconductor based method is a method of measuring a generation amount of carbon monoxide based on a change in electric conductivity of a metal oxide semiconductor due to adsorption of gas on a surface thereof. The CO detector compares the detection amount with a threshold value preliminary set by the CO detector. When the detection amount exceeds the threshold value, the CO detector determines that carbon monoxide has been generated.

As shown in FIG. 1, the server 4 is connected to the upper system master (upper communication device) 2 through the network NT. Thus, the server 4 receives, from the upper system master 2 through the network NT, data which the upper system master 2 receives from the lower system master 1 or any of the lower system slaves 3.

In this regard, based on fire information which the upper system master 2 obtains from the lower system master 1 or any of the lower system slaves 3 of the lower system 20A, the upper system 10 sends notification that a fire has occurred, to the server 4 through the network NT. Additionally, in the upper system 10, a cooperation stop signal for stopping a fire cooperation warning (described later) of the lower system master 1 and the lower system slaves 3 is sent from the server 4 to the upper system master 2 through the network NT. Therefore, according to the upper system 10, the fire cooperation warning of the lower system master 1 and the lower system slaves 3 is stopped by the cooperation stop signal sent from the server 4.

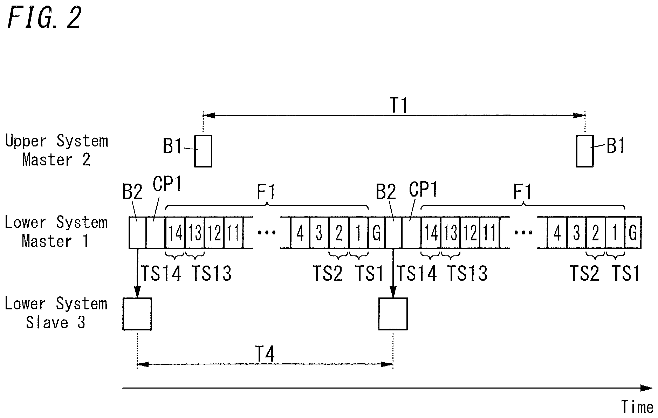

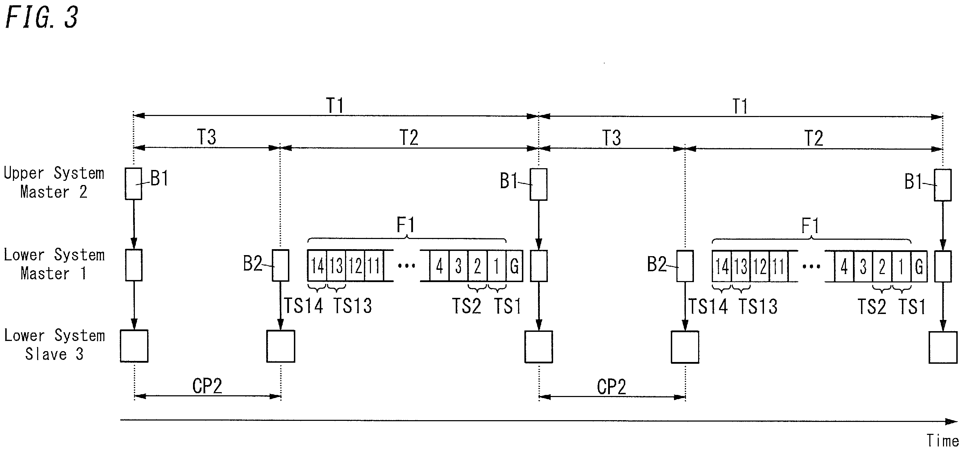

The communication system of the present embodiment applies time division multiple access (TDMA) for communication between the lower system master 1 and the plurality of lower system slaves 3 constituting the lower system 20. In more detail, as shown in FIG. 2 and FIG. 3, each of the plurality of lower system slaves 3 is configured to send the wireless signal S1 only within a time slot TSn which is one of a plurality of time slots TSn (n = 1, 2, ...) and is allocated to the lower system slave 3. Additionally, the lower system master 1 is configured to, for each of the plurality of time slots TSn, receive the wireless signal S1 from a corresponding lower system slave 3. FIG. 2 and FIG. 3 show F1 which denotes a frame constituted by the plurality of time slots TSn (n = 1, 2, ...).

FIG. 2 is an explanatory diagram of operations of a communication system according to a comparative example in relation to the present embodiment. As shown in FIG. 2, the upper system master 2 sends a first beacon signal B1 to the lower system master 1 and the lower system slaves 3 each time a first length of time T1 (for example, four seconds) elapses. While, the lower system master 1 sends the second beacon signal B2 to the lower system slaves 3 each time a fourth length of time T4 (for example, two seconds) elapses.

The lower system master 1 can receive the wireless signals S1 from the plurality of lower system slaves 3 within the plurality of time slots TSn (n = 1, 2, ...) set after sending of the second beacon signal B2. For example, when there are three lower system slaves 3, the lower system master 1 can receive the wireless signal S 1 from the lower system slaves 3 within the time slots TS1 to TS3. Apparently, in the communication system according to the comparative example, the lower system 20 allows the lower system master 1 and the lower system slaves 3 to establish synchronous communication according to the second beacon signal B2.

Note that, in the communication system according to the comparative example, the lower system master 1 and the lower system slaves 3 do not receive the first beacon signal B1 which is regularly sent from the upper system master 2. Stated differently, the lower system master 1 and the lower system slaves 3 are not synchronized with the upper system master 2. Therefore, the lower system master 1 sends the second beacon signal B2 irrespective of presence of the first beacon signal B1 from the upper system master 2, and this may result in collision between the first beacon signal B1 and the second beacon signal B2.

In view of this, in the communication system of the present embodiment, to suppress collision between the first beacon signal B1 from the upper system master 2 and the second beacon signal B2 from the lower system master 1, the lower system master 1 is configured as described below.

FIG. 3 is an explanatory diagram of operations of the communication system according to the present embodiment. In the same manner as in FIG. 2, the upper system master 2 sends the first beacon signal B1 to the lower system master 1 and the lower system slaves 3 each time the first length of time T1 elapses. While, the lower system master 1 and the lower system slaves 3 receive the first beacon signal B1 from the upper system master 2. As a result, the lower system master 1 and the lower system slaves 3 are allowed to establish synchronous communication with the upper system master 2.

As shown in FIG. 3, the lower system master 1 sends the second beacon signal B2 to the lower system slave 3 when a predetermined period of time T3 (for example, one second) elapses from receiving the first beacon signal B1 from the upper system master 2. This makes a time lag between sending of the first beacon signal B1 and sending of the second beacon signal B2, and this may result in suppressing collision between the first beacon signal B1 and the second beacon signal B2.

In this regard, it is preferable that a length of the frame F1 be shorter than a second length of time T2 calculated by subtracting the predetermined length of time T3 from the first length of time T1 equal to a sending interval of the first beacon signal B1. In this case, as shown in FIG. 3, the frame F1 can be set within a period of time from sending of the second beacon signal B2 to receiving of the first beacon signal B1 which comes next. Accordingly, the lower system master 1 can receive the first beacon signal B1 and also can receive the wireless signals S1 from the plurality of lower system slaves 3 within the frame F1.

Note that, in this communication system, it is preferable that the lower system master 1 and the lower system slaves 3 can establish bidirectional communication with the upper system master 2. In the communication system according to the comparative example, as described above, the lower system master 1 and the lower system slaves 3 are not synchronized with the upper system master 2. However, there is a communication period of time CP1 (for example, 100 milliseconds) set within an interval between the second beacon signal B2 and the frame F1 (see FIG. 2). Accordingly, the lower system master 1 and the lower system slaves 3 are allowed to communicate with the upper system master 2 by use of the communication period of time CP1. However, the communication period of time CP1 is relatively short, and therefore communication may be interrupted due to contents of the communication.

In contrast, in the communication system of the present embodiment, a period of time from receiving of the first beacon signal B1 from the upper system master 2 to sending of the second beacon signal B2 to the lower system slaves 3 by the communication unit 11 of the lower system master 1 is set as a communication period of time CP2 (see FIG. 3). Accordingly, a length of time allocated to the communication period of time CP2 is equal to the predetermined length of time T3 and therefore is one second in the present embodiment. Therefore, in the communication system of the present embodiment, the communication period of time CP2 is longer than the communication period of time CP1 and interruption of communication can be suppressed. The communication period of time CP2 allows the lower system master 1 and the lower system slaves 3 to communicate with the upper system master 2 in a bidirectional manner.

Next, operations of the communication system of the present embodiment are described with reference to FIG. 4. The following description is made to an example where one upper system master 2, one lower system master 1, and three lower system slaves 3A to 3C communicate with each other. The following description relates to a case where the fire detector 34 detects occurrence of a fire. However, the following description applies *mutatis mutandis* to a case where a CO detector detects generation of carbon monoxide.

In FIG. 4, "Sending" of "Upper System Master 2" denotes operation of the sending circuit of the upper communication unit 22 (each hatched box indicates it is in sending operation), and "Receiving" of "Upper System Master 2" denotes operation of the receiving circuit of the upper communication unit 22 (each hatched box indicates it is in receiving operation). Additionally, in FIG. 4, "Sending" of "Lower System Master 1" denotes operation of the sending circuit of the communication unit 11 (each hatched box indicates it is in sending operation), and "Receiving" of "Lower System Master 1" denotes operation of the receiving circuit of the communication unit 11 (each hatched box indicates it is in receiving operation). Further, in FIG. 4, "Sending" of each of "Lower System Slave 3A", "Lower System Slave 3B", and "Lower System Slave 3C" denotes operation of the sending circuit of the transceiver 31 (each hatched box indicates it is in sending operation). Furthermore, in FIG. 4, "Receiving" of each of "Lower System Slave 3A", "Lower System Slave 3B", and "Lower System Slave 3C" denotes operation of the receiving circuit of the transceiver 31 (each hatched box indicates it is in receiving operation).

When the upper communication unit 22 of the upper system master 2 sends the first beacon signal B1, the communication unit 11 of the lower system master 1 and the transceivers 31 of the lower system slaves 3A to 3C receive the first beacon signal B1 respectively. The upper communication unit 22 sends the first beacon signal B1 to the lower system master 1 and the lower system slaves 3A to 3C each time the first length of time T1 elapses. Accordingly, in the communication system of the present embodiment, the lower system master 1 and the lower system slaves 3A to 3C establish synchronous communication with the upper system master 2 according to the first beacon signal B1 from the upper system master 2.

For example, when the fire detector 34 of the lower system slave 3B detects a fire, the processor 32 of the lower system slave 3B generates a notification signal S11 including a detection result of the fire detector 34. Then, the processor 32 instructs the transceiver 31 to send the notification signal S11 to the upper system master 2 by use of time slots set in synchronization with the first beacon signal B1. Additionally, the processor 32 instructs the alarm 35 to issue a fire warning in response to the detection result of the fire detector 34. The fire warning means a warning which a fire alarm at the origin of the fire issues in order to announce occurrence of the fire. For example, the processor 32 instructs the alarm 35 to make a buzz by its buzzer, or instructs the alarm 35 to make a message stating "Fire!" or the like by its speaker. When receiving the notification signal S11 from the lower system slave 3B, the upper control unit 21 of the upper system master 2 instructs the upper communication unit 22 to send an acknowledgement (ACK) signal S12 to the lower system slave 3B.

After that, the processor 32 of the lower system slave 3B instructs the transceiver 31 to send a notification signal S13 including the detection result of the fire detector 34 to the lower system master 1 and the lower system slaves 3A and 3C by use of the aforementioned time slots. At this time, the communication unit 11 of the lower system master 1 and the transceivers 31 of the lower system slaves 3A and 3C are in receiving states. When receiving the notification signal S13 from the lower system slave 3B, the control unit 12 of the lower system master 1 instructs the communication unit 11 to send an acknowledgement signal to the lower system slave 3B, and instructs the alarm 14 to issue the fire cooperation warning. The fire cooperation warning is a warning which a fire alarm not at the origin of the fire issues to announce occurrence of the fire. For example, the control unit 12 instructs the alarm 14 to make a buzz by its buzzer, or instructs the alarm 14 to make a message stating "Fire is occurring at another place. Please move apart from the building immediately" or the like by its speaker. Similarly, when receiving the notification signal S13 from the lower system slave 3B, the processors 32 of the lower system slaves 3A and 3C instruct the transceivers 31 to send acknowledgement signals to the lower system slave 3B, and instruct the alarms 35 to issue the fire cooperation warnings.

After receiving the notification signal S13 from the lower system slave 3B, the control unit 12 of the lower system master 1 instructs the communication unit 11 to send the second beacon signal B2 to the lower system slaves 3A to 3C at a timing when the predetermined length of time T3 elapses from receiving of the first beacon signal B1. The lower system slaves 3A to 3C receive the second beacon signal B2 from the lower system master 1 and thus establish synchronous communication with the lower system master 1.

Note that, in the present embodiment, the lower system slaves 3A and 3C are supposed to be located within an area where which they can receive the notification signal S13 from the lower system slave 3B. However, actually, in some cases the lower system slaves 3 may be located within an area where they cannot receive the notification signal S13 from the lower system slave 3B. In contrast, the lower system master 1 is located in an area where it can send to and receive from all the lower system slaves 3 the wireless signal S1. To address a possible case where one or more of the lower system slaves 3 may be located in an area where it or they cannot receive the notification signal S13 from the lower system slave 3B, it is preferable to include a notification signal in the second beacon signal B2 which is sent from the lower system master 1 first (broadcasting). As the result, all the lower system slaves 3 can receive notification signals. Of course, notification signals may be sent independent from the second beacon signal B2.

Next, the cooperation stop signal for stopping the fire cooperation warning of the lower system master 1 and the lower system slaves 3 is sent from a manual operation terminal such as a smartphone to the upper system master 2 by way of the server 4. Then, the upper control unit 21 of the upper system master 2 instructs the upper communication unit 22 to send a cooperation stop signal S14 to the lower system master 1 and the lower system slaves 3 within the communication period of time CP2. When receiving the cooperation stop signal S14 from the upper system master 2, the lower system master 1 and the lower system slaves 3A and 3C instruct the alarm 14 and the alarms 35 to stop the fire cooperation warnings in accordance with the cooperation stop signal S14. While, the lower system slave 3B is the fire alarm at the origin of the fire and therefore instructs the alarm 35 to continue the fire warning in spite of receiving of the cooperation stop signal S14.

When determining, based on the detection result of the fire detector 34, that the fire has been extinguished, the processor 32 of the lower system slave 3B instructs the transceiver 31 to send a notification signal S15 including the detection result of the fire detector 34 to the upper system master 2 within the communication period of time CP2. When receiving the notification signal S15 from the lower system slave 3B, the upper control unit 21 of the upper system master 2 instructs the upper communication unit 22 to send an acknowledgement signal S16 to the lower system slave 3B within the communication period of time CP2.

Additionally, the processor 32 of the lower system slave 3B instructs the transceiver 31 to send a notification signal S17 including the detection result of the fire detector 34 to the lower system master 1 and the lower system slaves 3A and 3C within a period of time corresponding to the time slot TS2 allocated to the lower system slave 3B. The control unit 12 of the lower system master 1 stops sending of the second beacon signal B2 in response to the notification signal S17 from the lower system slave 3B. After that, the lower system master 1 and the lower system slaves 3A to 3C establish synchronous communication in accordance with the first beacon signal B1 from the upper system master 2.

Note that, in the communication system of the present embodiment, as described above, the communication unit 11 of the lower system master 1 and the upper communication unit 22 of the upper system master 2 are configured to establish bidirectional communication with each other within the communication period of time CP2. However, in a case where a communication error between the communication unit 11 and the upper communication unit 22 takes place, there is a possibility that communication between the communication unit 11 and the upper communication unit 22 do not end within the communication period of time CP2. To address this case, it is preferable that the control unit 12 be configured to instruct the communication unit 11 not to send the second beacon signal B2 to prioritize communication between the communication unit 11 and the upper communication unit 22.

Note that, when the second beacon signal B2 is not sent, the lower system slave 3 may fail to synchronize with the lower system master 1 and therefore may send the wireless signal S1 within the time slot TSn different from the time slot TSn (n = 1, 2, ...) allocated to the lower system slave 3. In contrast, the lower system slave 3 of the present embodiment is configured to measure the length of elapsed time from receiving of the second beacon signal B2 by use of the timer 33. Therefore, in the communication system, the processor 32 of the lower system slave 3 can determine a period of time corresponding to the time slot TSn (n = 1, 2, ...) allocated to the lower system slave 3, based on the length of elapsed time measured by the timer 33. Accordingly, the processor 32 of the lower system slave 3 can instruct the transceiver 31 to send the wireless signal S1 within the period of time corresponding to the time slot TSn (n = 1, 2, ...) allocated to the lower system slave 3.

Note that, when as for communication between the upper system master 2 and the lower system master 1 communication error occurs successively, a condition where the second beacon signal B2 cannot be sent may occur multiple times successively. In this case, the lower system slave 3 may fail to synchronize with the lower system master 1 even if the lower system slave 3 includes the timer 33 as described above. For this reason, the lower system master 1 may be preferably configured to interrupt communication with the upper system master 2 before the length of elapsed time measured by the timer 33 exceeds a predetermined length of time (for example, 30 seconds), and then send the second beacon signal B2 to the lower system slave 3. Accordingly, error in synchronization between the lower system master 1 and the lower system slave 3 which may be caused by an event that a condition where the second beacon signal B2 cannot be sent occurs multiple times successively, can be suppressed, while communication between the upper system master 2 and the lower system master 1 is prioritized.

Hereinafter, modifications of Embodiment 1 are described.

In Embodiment 1, the entire lower systems 20A and 20B are included in the upper system 10. However, it is sufficient that at least communication device 1 is included in the upper system 10. Communication terminals 3 (3A to 3C) may not be included in the upper system 10.

In Embodiment 1, the two lower systems 20A and 20B are included in the upper system 10 but only the lower system 20A may be included in the upper system 10 or only the lower system 20B may be included in the upper system 10. Alternatively, in addition to the two lower systems 20A and 20B, one or more additional lower systems may be included in the upper system 10.

In Embodiment 1, the number of communication terminals (lower system slaves) 3 is three. However, the number of communication terminals 3 may not be limited to three but may be one or two or four or more.

In an example illustrated in relation to Embodiment 1, the lower system master 1 plays a role of the communication device. However, any of the plurality of lower system slaves 3 may play a role of the communication device. Stated differently, the communication device may have the same configurations and functions as the communication terminal. In this case, for example, a lower system slave 3 which is one of the plurality of lower system slaves 3 and is first registered with the upper system master 2 may be selected as the communication device, and the remaining lower system slave(s) 3 may be selected as the communication terminal(s).

In an example illustrated in relation to Embodiment 1, communication error is referred to as one of concrete examples of a case where communication between the lower system master 1 and the upper system master 2 becomes longer. However, such concrete examples include a case where synchronization between the lower system master 1 and the upper system master 2 is lost. In more detail, in this case, it is necessary to synchronize the lower system master 1 and the upper system master 2 with each other again, and therefore this may lead to an increase in a communication period of time. Therefore, also in this case, it is preferable to instruct the communication unit 11 not to send the second beacon signal B2 in order to prioritize communication between the lower system master 1 and the upper system master 2.

### (EMBODIMENT 2)

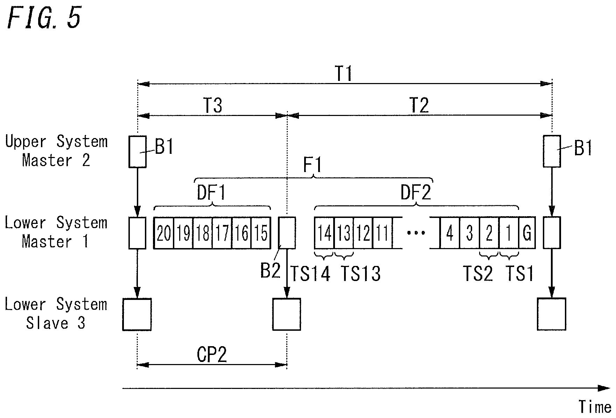

A communication device and a communication system according to Embodiment 2 are described with reference to FIG. 5. Note that, configurations of the communication device and the communication system are same as those in Embodiment 1, and therefore the same components are designated by same reference signs to avoid redundant descriptions.

In the communication system of Embodiment 1, there are three lower system slaves 3, and the length of the frame F1 set after sending of the second beacon signal B2 is shorter than the second length of time T2 (see FIG. 3). In contrast, when the length of the frame F1 is longer than the second length of time T2, there may be a probability that the lower system master 1 fails to receive all the wireless signals S1 sent from the individual lower system slaves 3. For this reason, when the length of the frame F1 is longer than the second length of time T2, it is preferable that the frame F1 be divided into a plurality of divided frames DFm (m = 1, ...).

In an example shown in FIG. 5, it is supposed that twenty lower system slaves 3 are used. The frame F1 is divided into a divided frame DF1 constituted by six time slots TS15 to TS20 and a divided frame DF2 constituted by fourteen time slots TS1 to TS14. These divided frames DF1 and DF2 have lengths shorter than the second length of time T2. The divided frames DF2 is set within a period of time between receiving of the second beacon signal B2 and receiving of the first beacon signal B1 which comes next, and the divided frames DF1 is set within the communication period of time CP2 between receiving of the first beacon signal B1 and receiving of the second beacon signal B2. Apparently, even when the number of lower system slaves 3 included in the lower system 20 is increased, it is possible to receive all the wireless signals S1 from the individual lower system slaves 3 by use of the communication period of time CP2.

Hereinafter, modifications of Embodiment 2 are described.

Embodiment 2 relates to a case where the number of lower system slaves 3 is increased. This is applicable to a case where an amount of data to be transmitted is increased, for example. An increase in an amount of data may result in failure to send it via one time slot TSn (n = 1, 2, ...). In this case, the data is divided into pieces of divided data, and then sent. Therefore, this case may result in an increase in the number of time slots TSn, and accordingly the length of the frame F1 may become longer than the second length of time T2. Therefore, it is preferable to divide the frame F1 into a plurality of divided frames even when an amount of data to be transmitted is increased.

Additionally, in Embodiment 2, the frame F1 is divided into the two divided frames DF1 and DF2. However, the frame F1 may not be limited to being divided into two, but may be divided into three or more. When the frame F1 is divided into three or more, two or more divided frames may be set within the communication period of time CP2.

Additionally, the configurations described in relation to Embodiment 2 can be used in combination with any modifications described in relation to Embodiment 1 in appropriate ways.

### Reference Signs List

- 1: Communication Device
- 2: Upper Communication Device
- 3, 3A to 3C: Communication Terminal
- 10: Upper System
- 11: Communication Unit
- 12: Control Unit
- 20,: 20A, 20B Lower System
- 31: Transceiver
- 32: Processor
- 33: Timer
- B1: First Beacon Signal
- B2: Second Beacon Signal
- CP2: Communication Period of Time
- DFm (m = 1, ...): Divided Frame
- F1: Frame
- S1: Wireless Signal
- T1: First Period of Time
- T2: Second Period of Time
- T3: Predetermined Period of Time
- TSn (n = 1, 2, ...): Time Slot

## Claims

1. A communication device (1) configured to constitute an upper system (10) together with an upper communication device (2), to constitute, together with at least one communication terminal (3), a lower system (20) using a communication scheme different from a communication scheme of the upper system (10), and to establish synchronous communication with the upper communication device (2) and the at least one communication terminal (3),
the communication device (1) comprising:
a communication unit (11) configured to send to and receive from the upper communication device (2) and the at least one communication terminal (3) a wireless signal (S1) using a radio wave as a communication medium; and
a control unit (12) configured to control the communication unit (11),
wherein the control unit (12) is configured to, when a predetermined length of time (T3) elapses from receiving a first beacon signal (B1) from the upper communication device (2) by the communication unit (11), instruct the communication unit (11) to send a second beacon signal (B2) to the at least one communication terminal (3);
**characterized in that**
the communication scheme in the lower system (20) is time division multiple access allowing the at least one communication terminal (3) to send the wireless signal (S1) within a time slot (TSn) which is one of a plurality of time slots (TSn) set after receiving the second beacon signal (B2) and is allocated to the at least one communication terminal (3); and
a length of a frame (F1) constituted by the plurality of time slots (TSn) is shorter than a second length of time (T2) calculated by subtracting the predetermined length of time (T3) from a first length of time (T1) equal to a sending interval of the first beacon signal (B1).

2. A communication device (1) configured to constitute an upper system (10) together with an upper communication device (2), to constitute, together with at least one communication terminal (3), a lower system (20) using a communication scheme different from a communication scheme of the upper system (10), and to establish synchronous communication with the upper communication device (2) and the at least one communication terminal (3),
the communication device (1) comprising:
a communication unit (11) configured to send to and receive from the upper communication device (2) and the at least one communication terminal (3) a wireless signal (S1) using a radio wave as a communication medium; and
a control unit (12) configured to control the communication unit (11),
wherein the control unit (12) is configured to, when a predetermined length of time (T3) elapses from receiving a first beacon signal (B1) from the upper communication device (2) by the communication unit (11), instruct the communication unit (11) to send a second beacon signal (B2) to the at least one communication terminal (3);
**characterized in that**
the communication scheme in the lower system (20) is time division multiple access allowing the at least one communication terminal (3) to send the wireless signal (S1) within a time slot (TSn) which is one of a plurality of time slots (TSn) set after receiving of the second beacon signal (B2) and is allocated to the at least one communication terminal (3);
the control unit (12) is configured to, when a length of a frame (F1) constituted by the plurality of time slots (TSn) is longer than a second length of time (T2) calculated by subtracting the predetermined length of time (T3) from a first length of time (T1) equal to a sending interval of the first beacon signal (B1), divide the frame (F1) into a plurality of divided frames (DFm);
a length of each of the plurality of divided frames (DFm) is shorter than the second length of time (T2); and
the control unit (12) is configured to select at least one divided frame (DFm) of the plurality of divided frames (DFm) as a communication period of time (CP2) from receiving of the first beacon signal (B1) to sending of the second beacon signal (B2) by the communication unit (11).

3. The communication device (1) according to any one of claim 1 or 2, wherein:
the communication unit (11) is allowed to communicate with the upper communication device (2) during a communication period of time (CP2) from receiving of the first beacon signal (B1) to sending of the second beacon signal (B2); and
the control unit (12) is configured to instruct the communication unit (11) not to send the second beacon signal (B2) when communication between the communication unit (11) and the upper communication device (2) fails to end within the communication period of time (CP2).

4. A communication system comprising:
the communication device (1) according to any one of claims 1 to 3;
an upper communication device (2) configured to constitute an upper system (10) together with the communication device (1) and to send a first beacon signal (B1) to the communication device (1); and
at least one communication terminal (3) configured to constitute a lower system (20) together with the communication device (1) and to communicate with the communication device (1) by a communication scheme different from a communication scheme used by the upper communication device (2) to communicate with the communication device (1).

5. The communication system according to claim 4, wherein:
the at least one communication terminal (3) includes a transceiver (31) configured to send to and receive from at least the communication device (1) a wireless signal (S1) using a radio wave as a communication medium,
a timer (33) configured to measure a length of elapsed time from receiving of a second beacon signal (B2) from the communication device (1) by the transceiver (31), and
a processor (32) configured to instruct the transceiver (31) to send the wireless signal (S1) within a time slot (TSn) which is one of a plurality of time slots (TSn) set after receiving of the second beacon signal (B2) and is allocated to the at least one communication terminal (3); and
the processor (32) is configured to instruct the transceiver (31) to send the wireless signal (S1) when the transceiver (31) fails to receive the second beacon signal (B2) and when the length of elapsed time measured by the timer (33) indicates start of the time slot (TSn) which is one of the plurality of time slots (TSn) and is allocated to the at least one communication terminal (3).

6. The communication system according to claim 5, wherein
the communication device (1) is configured to, when an event that the communication device (1) fails to send the second beacon signal (B2) due to the communication device (1) being communicating with the upper communication device (2), occurs continuously multiple times, interrupt communicating with the upper communication device (2) and send the second beacon signal (B2) to the at least one communication terminal (3).

## Patentansprüche

1. Kommunikationsvorrichtung (1), die konfiguriert ist, um zusammen mit einer oberen Kommunikationsvorrichtung (2) ein oberes System (10) zu bilden, um zusammen mit mindestens einem Kommunikationsendgerät (3) unter Verwendung eines Kommunikationsschemas, das sich von einem Kommunikationsschema des oberen Systems (10) unterscheidet, ein unteres System (20) zu bilden, und um eine synchrone Kommunikation mit der oberen Kommunikationsvorrichtung (2) und dem mindestens einen Kommunikationsendgerät (3) herzustellen,
wobei die Kommunikationsvorrichtung (1) umfasst:
eine Kommunikationseinheit (11), die konfiguriert ist, um an die obere Kommunikationsvorrichtung (2) und das mindestens eine Kommunikationsendgerät (3) ein drahtloses Signal (S1) unter Verwendung einer Funkwelle als ein Kommunikationsmedium zu senden und von diesen zu empfangen; und
eine Steuereinheit (12), die konfiguriert ist, um die Kommunikationseinheit (11) zu steuern,
wobei die Steuereinheit (12) konfiguriert ist, um, wenn eine vorbestimmte Zeitdauer (T3) seit dem Empfangen eines ersten Bakensignals (B1) von der oberen Kommunikationsvorrichtung (2) durch die Kommunikationseinheit (11) verstrichen ist, die Kommunikationseinheit (11) anzuweisen, ein zweites Bakensignal (B2) an das mindestens eine Kommunikationsendgerät (3) zu senden;
**dadurch gekennzeichnet, dass**
das Kommunikationsschema im unteren System (20) ein Zeitmultiplexzugriff ist, der es dem mindestens einen Kommunikationsendgerät (3) ermöglicht, das drahtlose Signal (S1) innerhalb eines Zeitschlitzes (TSn) zu senden, der einer von mehreren Zeitschlitzen (TSn) ist, die nach dem Empfangen des zweiten Bakensignals (B2) eingestellt sind, und dem mindestens einen Kommunikationsendgerät (3) zugeordnet ist; und
eine Länge eines Rahmens (F1), der durch die mehreren Zeitschlitze (TSn) gebildet wird, kürzer als eine zweite Zeitdauer (T2) ist, die durch Subtrahieren der vorbestimmten Zeitdauer (T3) von einer ersten Zeitdauer (T1) gleich einem Sendeintervall des ersten Bakensignals (B1) berechnet wird.

2. Kommunikationsvorrichtung (1), die konfiguriert ist, um zusammen mit einer oberen Kommunikationsvorrichtung (2) ein oberes System (10) zu bilden, um zusammen mit mindestens einem Kommunikationsendgerät (3) unter Verwendung eines Kommunikationsschemas, das sich von einem Kommunikationsschema des oberen Systems (10) unterscheidet, ein unteres System (20) zu bilden, und um eine synchrone Kommunikation mit der oberen Kommunikationsvorrichtung (2) und dem mindestens einen Kommunikationsendgerät (3) herzustellen,
wobei die Kommunikationsvorrichtung (1) umfasst:
eine Kommunikationseinheit (11), die konfiguriert ist, um an die obere Kommunikationsvorrichtung (2) und das mindestens eine Kommunikationsendgerät (3) ein drahtloses Signal (S1) unter Verwendung einer Funkwelle als ein Kommunikationsmedium zu senden und von diesen zu empfangen; und
eine Steuereinheit (12), die konfiguriert ist, um die Kommunikationseinheit (11) zu steuern,
wobei die Steuereinheit (12) konfiguriert ist, um, wenn eine vorbestimmte Zeitdauer (T3) seit dem Empfangen eines ersten Bakensignals (B1) von der oberen Kommunikationsvorrichtung (2) durch die Kommunikationseinheit (11) verstrichen ist, die Kommunikationseinheit (11) anzuweisen, ein zweites Bakensignal (B2) an das mindestens eine Kommunikationsendgerät (3) zu senden;
**dadurch gekennzeichnet, dass**
das Kommunikationsschema im unteren System (20) ein Zeitmultiplexzugriff ist, der es dem mindestens einen Kommunikationsendgerät (3) ermöglicht, das drahtlose Signal (S1) innerhalb eines Zeitschlitzes (TSn) zu senden, der einer von mehreren Zeitschlitzen (TSn) ist, die nach dem Empfangen des zweiten Bakensignals (B2) eingestellt sind, und dem mindestens einen Kommunikationsendgerät (3) zugeordnet ist;
die Steuereinheit (12) konfiguriert ist, um, wenn eine Länge eines Rahmens (F1), der durch die mehreren Zeitschlitze (TSn) gebildet wird, länger als eine zweite Zeitdauer (T2) ist, die durch Subtrahieren der vorbestimmten Zeitdauer (T3) von einer ersten Zeitdauer (T1) gleich einem Sendeintervall des ersten Bakensignals (B1) berechnet wird, den Rahmen (F1) in mehrere geteilte Rahmen (DFm) zu teilen;
eine Länge jedes der mehreren geteilten Rahmen (DFm) kürzer als die zweite Zeitdauer (T2) ist; und
die Steuereinheit (12) konfiguriert ist, um mindestens einen geteilten Rahmen (DFm) der mehreren geteilten Rahmen (DFm) als eine Kommunikationszeitdauer (CP2) vom Empfangen des ersten Bakensignals (B1) bis zum Senden des zweiten Bakensignals (B2) durch die Kommunikationseinheit (11) auszuwählen.

3. Kommunikationsvorrichtung (1) nach einem der Patentansprüche 1 oder 2, wobei:
die Kommunikationseinheit (11) mit der oberen Kommunikationsvorrichtung (2) während einer Kommunikationszeitdauer (CP2) vom Empfangen des ersten Bakensignals (B1) bis zum Senden des zweiten Bakensignals (B2) kommunizieren darf; und
die Steuereinheit (12) konfiguriert ist, um die Kommunikationseinheit (11) anzuweisen, das zweite Bakensignal (B2) nicht zu senden, wenn die Kommunikation zwischen der Kommunikationseinheit (11) und der oberen Kommunikationsvorrichtung (2) nicht innerhalb der Kommunikationszeitdauer (CP2) endet.

4. Kommunikationssystem, umfassend:
die Kommunikationsvorrichtung (1) nach einem der Patentansprüche 1 bis 3;
eine obere Kommunikationsvorrichtung (2), die konfiguriert ist, um ein oberes System (10) zusammen mit der Kommunikationsvorrichtung (1) zu bilden und ein erstes Bakensignal (B1) an die Kommunikationsvorrichtung (1) zu senden; und
mindestens ein Kommunikationsendgerät (3), das konfiguriert ist, um ein unteres System (20) zusammen mit der Kommunikationsvorrichtung (1) zu bilden und mit der Kommunikationsvorrichtung (1) durch ein Kommunikationsschema zu kommunizieren, das sich von einem Kommunikationsschema unterscheidet, das von der oberen Kommunikationsvorrichtung (2) verwendet wird, um mit der Kommunikationsvorrichtung (1) zu kommunizieren.

5. Kommunikationssystem nach Patentanspruch 4, wobei:
das mindestens eine Kommunikationsendgerät (3) enthält:
einen Sendeempfänger (31), der konfiguriert ist, um an mindestens die Kommunikationsvorrichtung (1) ein drahtloses Signal (S1) unter Verwendung einer Funkwelle als ein Kommunikationsmedium zu senden und von dieser zu empfangen,
einen Zeitgeber (33), der konfiguriert ist, um eine verstrichene Zeitdauer seit dem Empfangen eines zweiten Bakensignals (B2) von der Kommunikationsvorrichtung (1) durch den Sendeempfänger (31) zu messen, und
einen Prozessor (32), der konfiguriert ist, um den Sendeempfänger (31) anzuweisen, das drahtlose Signal (S1) innerhalb eines Zeitschlitzes (TSn) zu senden, der einer von mehreren Zeitschlitzen (TSn) ist, die nach dem Empfangen des zweiten Bakensignals (B2) eingestellt sind, und dem mindestens einen Kommunikationsendgerät (3) zugeordnet ist; und der Prozessor (32) konfiguriert ist, um den Sendeempfänger (31) anzuweisen, das drahtlose Signal (S1) zu senden, wenn der Sendeempfänger (31) das zweite Bakensignal (B2) nicht empfängt, und wenn die vom Zeitgeber (33) gemessene verstrichene Zeitdauer den Beginn des Zeitschlitzes (TSn) anzeigt, der einer der mehreren Zeitschlitze (TSn) ist, und dem mindestens einen Kommunikationsendgerät (3) zugeordnet ist.

6. Kommunikationssystem nach Patentanspruch 5, wobei
die Kommunikationsvorrichtung (1) konfiguriert ist, um, wenn ein Ereignis, dass die Kommunikationsvorrichtung (1) das zweite Bakensignal (B2) aufgrund dessen, dass die Kommunikationsvorrichtung (1) mit der oberen Kommunikationsvorrichtung (2) kommuniziert, nicht sendet, mehrere Male kontinuierlich auftritt, die Kommunikation mit der oberen Kommunikationsvorrichtung (2) zu unterbrechen und das zweite Bakensignal (B2) an das mindestens eine Kommunikationsendgerät (3) zu senden.

## Revendications

1. Dispositif de communication (1) configuré de manière à constituer un système supérieur (10) conjointement avec un dispositif de communication supérieur (2), à constituer, conjointement avec au moins un terminal de communication (3), un système inférieur (20) utilisant un schéma de communication différent d'un schéma de communication du système supérieur (10), et à établir une communication synchrone avec le dispositif de communication supérieur (2) et ledit au moins un terminal de communication (3) ;
le dispositif de communication (1) comprenant :
une unité de communication (11) configurée de manière à envoyer au dispositif de communication supérieur (2) et audit au moins un terminal de communication (3), et à recevoir de ceux-ci, un signal sans fil (S1), en utilisant une onde radio en tant que support de communication ; et
une unité de commande (12) configurée de manière à commander l'unité de communication (11) ;
dans lequel l'unité de commande (12) est configurée de manière à, lorsqu'une durée prédéterminée (T3) s'écoule depuis la réception d'un premier signal de balise (B1) à partir du dispositif de communication supérieur (2), par l'unité de communication (11), ordonner,
à l'unité de communication (11), d'envoyer un second signal de balise (B2) audit au moins un terminal de communication (3) ;
**caractérisé en ce que** :
le schéma de communication, dans le système inférieur (20), est un schéma d'accès multiple par répartition dans le temps permettant audit au moins un terminal de communication (3) d'envoyer le signal sans fil (S1) dans une tranche de temps (TSn) qui correspond à l'une parmi une pluralité de tranches de temps (TSn) définies après la réception du second signal de balise (B2) et qui est allouée audit au moins un terminal de communication (3) ; et
une longueur d'une trame (F1) constituée par la pluralité de tranches de temps (TSn) est plus courte qu'une seconde durée (T2) calculée en soustrayant la durée prédéterminée (T3) d'une première durée (T1) égale à un intervalle d'envoi du premier signal de balise (B1).

2. Dispositif de communication (1) configuré de manière à constituer un système supérieur (10) conjointement avec un dispositif de communication supérieur (2), à constituer, conjointement avec au moins un terminal de communication (3), un système inférieur (20) utilisant un schéma de communication différent d'un schéma de communication du système supérieur (10), et à établir une communication synchrone avec le dispositif de communication supérieur (2) et ledit au moins un terminal de communication (3) ;
le dispositif de communication (1) comprenant :
une unité de communication (11) configurée de manière à envoyer au dispositif de communication supérieur (2) et audit au moins un terminal de communication (3), et à recevoir de ceux-ci, un signal sans fil (S1), en utilisant une onde radio en tant que support de communication ; et
une unité de commande (12) configurée de manière à commander l'unité de communication (11) ;
dans lequel l'unité de commande (12) est configurée de manière à, lorsqu'une durée prédéterminée (T3) s'écoule depuis la réception d'un premier signal de balise (B1) à partir du dispositif de communication supérieur (2), par l'unité de communication (11), ordonner,
à l'unité de communication (11), d'envoyer un second signal de balise (B2) audit au moins un terminal de communication (3) ;
**caractérisé en ce que** :
le schéma de communication, dans le système inférieur (20), est un schéma d'accès multiple par répartition dans le temps permettant audit au moins un terminal de communication (3) d'envoyer le signal sans fil (S1) dans une tranche de temps (TSn) qui correspond à l'une parmi une pluralité de tranches de temps (TSn) définies après la réception du second signal de balise (B2) et qui est allouée audit au moins un terminal de communication (3) ;
l'unité de commande (12) est configurée de manière à, lorsqu'une longueur d'une trame (F1) constituée par la pluralité de tranches de temps (TSn) est plus longue qu'une seconde durée (T2) calculée en soustrayant la durée prédéterminée (T3) d'une première durée (T1) égale à un intervalle d'envoi du premier signal de balise (B1), diviser la trame (F1) en une pluralité de trames divisées (DFm) ;
une longueur de chacune de la pluralité de trames divisées (DFm) est plus courte que la seconde durée (T2) ; et
l'unité de commande (12) est configurée de manière à sélectionner au moins une trame divisée (DFm) de la pluralité de trames divisées (DFm) en tant qu'une période de temps de communication (CP2) entre la réception du premier signal de balise (B1) et l'envoi du second signal de balise (B2) par l'unité de communication (11).

3. Dispositif de communication (1) selon l'une quelconque des revendications 1 et 2, dans lequel :
l'unité de communication (11) est autorisée à communiquer avec le dispositif de communication supérieur (2) pendant une période de temps de communication (CP2) entre la réception du premier signal de balise (B1) et l'envoi du second signal de balise (B2) ; et
l'unité de commande (12) est configurée de manière à ordonner, à l'unité de communication (11), de ne pas envoyer le second signal de balise (B2) lorsque la communication entre l'unité de communication (11) et le dispositif de communication supérieur (2) ne parvient pas à s'achever au cours de la période de temps de communication (CP2).

4. Système de communication comprenant :
le dispositif de communication (1) selon l'une quelconque des revendications 1 à 3 ;
un dispositif de communication supérieur (2) configuré de manière à constituer un système supérieur (10) conjointement avec le dispositif de communication (1) et à envoyer un premier signal de balise (B1) au dispositif de communication (1) ; et
au moins un terminal de communication (3) configuré de manière à constituer un système inférieur (20) conjointement avec le dispositif de communication (1) et à communiquer avec le dispositif de communication (1) par le biais d'un schéma de communication différent d'un schéma de communication utilisé par le dispositif de communication supérieur (2) pour communiquer avec le dispositif de communication (1).

5. Système de communication selon la revendication 4, dans lequel :
ledit au moins un terminal de communication (3) inclut :
un émetteur-récepteur (31) configuré de manière à envoyer au moins au dispositif de communication (1), et à recevoir en provenance de celui-ci, un signal sans fil (S1), en utilisant une onde radio en tant que support de communication ;
un temporisateur (33) configuré de manière à mesurer une durée écoulée depuis la réception d'un second signal de balise (B2), provenant du dispositif de communication (1), par l'émetteur-récepteur (31) ; et
un processeur (32) configuré de manière à ordonner, à l'émetteur-récepteur (31), d'envoyer le signal sans fil (S1), dans une tranche de temps (TSn) qui correspond à l'une parmi une pluralité de tranches de temps (TSn) définies après la réception du second signal de balise (B2) et qui est allouée audit au moins un terminal de communication (3) ; et
le processeur (32) est configuré de manière à ordonner, à l'émetteur-récepteur (31), d'envoyer le signal sans fil (S1), lorsque l'émetteur-récepteur (31) ne parvient pas à recevoir le second signal de balise (B2) et lorsque la durée écoulée mesurée par le temporisateur (33) indique le début de la tranche de temps (TSn) qui correspond à l'une de la pluralité de tranches de temps (TSn) et qui est allouée audit au moins un terminal de communication (3).

6. Système de communication selon la revendication 5, dans lequel :
le dispositif de communication (1) est configuré de manière à, lorsqu'un événement, selon lequel le dispositif de communication (1) ne parvient pas à envoyer le second signal de balise (B2) en raison du fait que le dispositif de communication (1) est en communication avec le dispositif de communication supérieur (2), se produit en continu plusieurs fois, interrompre la communication avec le dispositif de communication supérieur (2) et envoyer le second signal de balise (B2) audit au moins un terminal de communication (3).
